# EUROPÄISCHE PATENTSCHRIFT

(11) **EP 3 511 954 B1**
(45) Veröffentlichungstag und Bekanntmachung des Hinweises auf die Patenterteilung: **30.08.2023**
(21) Anmeldenummer: 18151465.4
(22) Anmeldetag: 12.01.2018
(51) Int. Cl.: H01B 13/02, H01B 13/012, H01R 43/28

(54) **VORRICHTUNG UND VERFAHREN ZUM BEARBEITEN EINER MEHRZAHL VON ELEKTRISCHEN LEITUNGEN**
METHOD AND DEVICE FOR PROCESSING A PLURALITY OF ELECTRICITY LINES
DISPOSITIF ET PROCÉDÉ DE TRAITEMENT D'UNE MULTITUDE DE LIGNES ÉLECTRIQUES

(43) Veröffentlichungstag der Anmeldung: 17.07.2019
(73) Patentinhaber: KOMAX HOLDING AG, 6036 Dierikon (CH)
(72) Erfinder: STAUBLI, Dominik, 6048 Horw (CH); BUCHER, Markus, 6033 Buchrain (CH); SUTER, Beat, 6422 Steinen (CH)
(74) Vertreter: EGLI-EUROPEAN PATENT ATTORNEYS

(56) Entgegenhaltungen:
- EP-A2- 2 599 093
- EP-B1- 1 032 095
- JP-A- 2014 186 834
- US-A1- 2017 350 071
- Komax Ag: "NEWS DAS KUNDENMAGAZIN", , 2016, Seiten 1-24, XP055491772, Internet Gefunden im Internet: URL:http://www.komaxgroup.com/-/media/Wire /Files/Downloads/News/Komax_News_2016_2_DE .pdf?la=de-DE&hash=6CA628E41547C8EFE6997C1 83C24B18D9B897F81 [gefunden am 2018-07-11]

## Beschreibung

### Technisches Gebiet

Die Offenbarung betrifft eine Vorrichtung zum Bearbeiten einer Mehrzahl von elektrischen Leitungen sowie ein Verfahren, das die Vorrichtung verwendet.

Bei bestimmten Anwendungen werden mehrere elektrische Leitungen, die bündelartig nebeneinander geführt werden - mithin also Kabel mit mehreren Einzelleitern, die zunächst nicht oder nicht auf voller Länge umwickelt sind - in Kabelverarbeitungsvorrichtungen automatisch konfektioniert und anschliessend verdrillt. Eine Konfektionierung umfasst typischerweise, dass die einzelnen Leitungen an mindestens einem ihrer Enden abgelängt, abisoliert und/oder mit Kontakten, Tüllen etc. versehen werden. Üblicherweise werden verdrillte Leitungen, insbesondere verdrillte Leitungspaare, in einem späteren Arbeitsvorgang von Hand mit Steckergehäusen oder dergleichen bestückt.

Die Mehrzahl von Leitungen wird in einer solchen herkömmlichen Kabelverarbeitungsvorrichtung entlang verschiedener Arbeitsbereiche der Vorrichtung geführt. Typischerweise wird eines der Enden des Leitungsbündels durch diese Arbeitsbereiche gezogen, so dass ein vorauseilendes Ende des Leitungsbündels, das in Richtung der Zugbewegung geführt wird, und ein nacheilendes Ende des Leitungsbündels definiert werden können.

### Stand der Technik

Das Verdrillen der Leitungen kann aus signaltechnischen Gründen gewünscht sein, z. B. um eingekoppelte Gegentaktstörungen in ein Aderpaar zu verringern, oder es kann aus Gründen der einfachen Handhabung der Leitungen zur Weiterverarbeitung erfolgen. Eine verdrillte Mehrzahl von Leitungen weist durch die gegenseitige Umschlingung eine geringere Länge auf als die gleichen Leitungen im abgewickelten (d. h. nicht-verdrillten oder geringer verdrillten) Zustand.

Die EP 1 032 095 B1 zeigt eine Kabelverarbeitungsvorrichtung mit einer Verdrillfunktion. In diesem Stand der Technik werden zwei Leitungen gleichzeitig eingezogen und konfektioniert. Die vorauseilenden Leitungsenden werden zunächst in Zugrichtung transportiert und anschliessend an eine Verdrilleinrichtung übergeben. Die Verdrilleinrichtung weist ein ortsfestes Haltemodul auf, das die nacheilenden Leitungsenden während des Verdrillvorgangs festhält, sowie einen in Kabelführungsrichtung beweglichen Verdrillkopf, der die vorauseilenden Leitungsenden greifen und umeinanderschlingen (verdrillen) kann. Aufgrund der während des Verdrillvorgangs auftretenden Verkürzung wird der Verdrillkopf entlang der Führungsrichtung in Richtung ortsfesten Haltemoduls nachgeführt, wobei eine Zugkraftmessung als Führungsgrösse dient.

Die EP 2 777 053 B1 beschreibt eine weitere Kabelverarbeitungsvorrichtung mit einer Verdrillfunktion. Hier werden zwei Leiter zeitlich nacheinander eingezogen, konfektioniert und weiter herausgezogen. Danach werden sie gemeinsam an eine Verdrilleinrichtung übergeben. Die Verdrilleinrichtung verfügt über je einen Verdrillkopf zum Verdrillen der Leitungen an ihrem vorauseilenden Ende und zum Verdrillen der Leitungen an ihrem nacheilenden Ende. Einer der Verdrillköpfe wird entlang der Führungsrichtung nachgeführt, um die während des Verdrillvorgangs auftretende Verkürzung zu kompensieren.

Um zu verhindern, dass sich verdrillte Leitungen wieder entgegen ihrer Verdrillung abwickeln ("entdrillen"), ist es bekannt, die verdrillten Leitungen zu fixieren. Typischerweise werden die verdrillten Leitungen mit einem Klebeband umwickelt. Die DE 20 2015 001 990 U1 zeigt einen Bündelkopf, der ein verdrilltes Ende eines Leitungspaares bündelt, indem er eine definierte Stelle mit einem Klebeband umwickelt.

Dokument JP 2014-186834 A beschreibt ein Verfahren und eine Einrichtung zum Umwickeln eines verdrillten Kabels mit Klebeband. Ein vorkonfektioniertes Kabel wird in eine Verdrillmaschine eingelegt. Ein Kabel-Wickelkopf ist in einer Ebene bewegbar, die im Wesentlichen senkrecht zu der Kabelachse des verdrillten Kabels verläuft.

Dokument WO 2012/015057 A2 beschreibt eine Vorrichtung und ein Verfahren zum Herstellen eines verdrillten Kabelpaars. Ein Klebeband wird automatisch um ein Ende des verdrillten Kabelpaars gewickelt.

Soll ein bekannter Bündelkopf zum Bündeln eines Bündelbereichs am vorauseilenden Leitungsende angeordnet werden, ist dieser typischerweise entlang der Führungsrichtung beweglich, da verdrillte Leitungen mit unterschiedlichen Längen hergestellt werden sollen. Die Position, an welcher das Klebeband angebracht werden soll, muss für den Bündelkopf ausreichend genau bestimmbar sein. Die genaue Länge bzw. Lage des vorauseilenden Leitungsendes in der Führungsrichtung ist jedoch auch bei gleichartigen verdrillten Leitungen untereinander nicht gleich, beispielsweise, weil die nachführende Bewegung des Verdrillkopfes für das vorauseilende Leitungsende kraft- und nicht längengeregelt erfolgt.

Wird der Bündelkopf für das vorauseilende Leitungsende gemeinsam mit dem Verdrillkopf für das vorauseilende Leitungsende montiert und bewegt, ist die Masse dieser Einheit relativ gross. Ausserdem müsste diese grosse Masse auch bewegt werden, wenn die Kabelverarbeitungsvorrichtung einen Betrieb durchführt, bei welchem nur verdrillt wird, der Bündelkopf aber nicht zum Einsatz kommt.

Es ist eine Aufgabe der vorliegenden Offenbarung, eine Vorrichtung oder ein Verfahren zum Bearbeiten einer Mehrzahl von elektrischen Leitungen anzugeben, die auf einfache Weise eine genaue Positionierung einer ortsveränderlichen Bündeleinrichtung, wie z. B. eines ortsveränderlichen Bündelkopfes, ermöglicht.

### Lösung der Probleme

Gemäss der vorliegenden Offenbarung wird eine Vorrichtung zum Bearbeiten einer Mehrzahl von elektrischen Leitungen gemäss Anspruch 1 angegeben.

Bei Ausführungsformen umfasst die Vorrichtung eine Zuführungseinrichtung, die zum Führen eines vorauseilenden Endes der Mehrzahl von Leitungen durch den Bereich einer Bearbeitungsregion konfiguriert ist.

Eine Mehrzahl von Leitungen umfasst typischerweise zwei Leitungen, kann aber auch mehr als zwei Leitungen umfassen. Bearbeitungsregion, wie hierin verwendet, umfasst einen Bereich, in welchem maschinelle Manipulationen an der Mehrzahl von Leitungen vorgenommen werden können, insbesondere an einem Ende der Mehrzahl von Leitungen. Manipulationen umfassen z. B. ein Halten der Leitungen, ein Übernehmen bzw. Übergeben der Leitungen, ein Schneiden der Leitungen bzw. Leitungsenden, ein Abisolieren der Leitungen bzw. Leitungsenden, ein Bestücken der Leitungen bzw. Leitungsenden beispielsweise mit Kontakten oder Tüllen.

Die Vorrichtung umfasst weiter eine im Bereich der Bearbeitungsregion angeordnete ortsfeste Halteeinrichtung, die zum Halten eines nacheilenden Endes der Leitungen konfiguriert ist, sowie eine entlang einer linearen Führungsrichtung ortsveränderliche Halteeinrichtung, die zum Halten des vorauseilenden Endes der Leitungen konfiguriert ist.

Die lineare Führungsrichtung entspricht typischerweise der Verlaufsrichtung der geführten Leitungsenden. Typischerweise ist die ortsveränderliche Halteeinrichtung dazu konfiguriert, ein von ihr gehaltenes vorauseilendes Leitungsende der Mehrzahl von Leitungen entlang der linearen Führungsrichtung auszuziehen.

Die ortsfeste Halteeinrichtung ist dazu konfiguriert, das von ihr gehaltene Leitungsende zu verdrillen. Alternativ oder zusätzlich ist die ortsveränderliche Halteeinrichtung dazu konfiguriert, das von ihr gehaltene Leitungsende zu verdrillen.

Verdrillen, wie hierin verwendet, beschreibt typischerweise einen Vorgang, bei welchem die jeweiligen Leitungsenden gegeneinander um ihre Verlaufsachse verdreht werden, so dass sie sich gegenseitig umschlingen. Das Verdrillen eines Leitungsendes schliesst insbesondere auch ein, dass sich eine solche gegenseitige Umschlingung der Leitungsenden über die Verlaufsachse der Leitungen fortsetzt, typischerweise bis zum jeweils anderen Leitungsende fortsetzt.

Die Vorrichtung weist weiter eine ortsveränderliche Bündeleinrichtung auf. Die ortsveränderliche Bündeleinrichtung ist von der ortsveränderlichen Halteeinrichtung mittels eines ansteuerbaren Antriebs separat beweglich. Die ortsveränderliche Bündeleinrichtung weist einen Bündelabschnitt auf, wobei der Bündelabschnitt zum Bündeln eines Bündelbereichs am vorauseilenden Ende der Leitungen konfiguriert ist.

Bündeln, wie hierin verwendet, umfasst beispielsweise, dass der Bündelbereich derart manipuliert wird, dass die Verdrillung der verdrillten Leitungen fixiert ist, und insbesondere, dass die Verdrillung nicht oder nicht nennenswert aufgehoben wird. Beispielsweise wird beim Bündeln ein Fixierelement im Bündelbereich angebracht. Typischerweise ist das Fixierelement ein Klebeband, wobei das Klebeband im Bündelbereich um die Leitungen gewickelt wird. Das Bündeln erfolgt mittels des Bündelabschnitts der Bündeleinrichtung.

Die Vorrichtung weist weiter eine Steuerung auf, die mit dem Antrieb der ortsveränderlichen Bündeleinrichtung verbunden ist. Die Steuerung ist derart konfiguriert, dass sie den Antrieb so ansteuert, dass ein Abstand zwischen dem Bündelabschnitt der ortsfesten Bündeleinrichtung und der ortsveränderlichen Halteeinrichtung einen vorgegebenen oder vorgebbaren Abstand annimmt.

Bei der hierin offenbarten Vorrichtung kann der Bündelabschnitt der ortsveränderlichen Bündeleinrichtung mit hinreichender Genauigkeit am Bündelbereich am vorauseilenden Ende der Leitungen positioniert werden, um den Bündelvorgang auszuführen. Die ortsveränderliche Bündeleinrichtung ist separat von der ortsveränderlichen Halteeinrichtung beweglich. Die Masse der ortsveränderlichen Bündeleinrichtung braucht also nur dann angetrieben zu werden, wenn die ortsveränderliche Bündeleinrichtung zum Einsatz kommt.

Weiterbildungen der hierin offenbarten Technik sind in den abhängigen Ansprüchen angegeben.

Bei Ausführungsformen umfasst die Vorrichtung weiter eine Abstandsmesseinrichtung. Die Abstandsmesseinrichtung ist so konfiguriert, dass sie den Abstand zwischen dem Bündelabschnitt der ortsveränderlichen Bündeleinrichtung und der ortsveränderlichen Halteeinrichtung misst. Die Steuerung ist zusätzlich mit der Abstandsmesseinrichtung verbunden.

Die Abstandsmesseinrichtung kann beispielsweise eine indirekt angeordnete Abstandsmesseinrichtung umfassen, z. B. einen ersten Distanzsensor, der an einem festgelegten Punkt montiert ist und die Distanz von dem festgelegten Punkt zu der ortsveränderlichen Halteeinrichtung misst, und einen zweiten Distanzsensor, der am gleichen oder an einem anderen festgelegten Punkt montiert ist und die Distanz von diesem festgelegten Punkt zu der ortsveränderlichen Bündeleinrichtung, insbesondere dem Bündelabschnitt der ortsveränderlichen Bündeleinrichtung, misst.

Beispiele für die Abstandsmesseinrichtung umfassen ein magnetostriktives Positionsmesssystem, ein magnetisches Positionsmesssystem oder ein optisches Positionsmesssystem. Weitere Beispiele für die Abstandsmesseinrichtung umfassen einen Positionsgeber und eine Wegeaufnehmeeinrichtung, wobei der Positionsgeber an einer Linearführung der ortsveränderlichen Halteeinrichtung angeordnet ist. Ein Beispiel für eine Linearführung der ortsveränderlichen Halteeinrichtung ist ein Führungsschlitten.

Die Abstandsmesseinrichtung ist typischerweise so konfiguriert, dass sie den gemessenen Abstand der Steuerung zuführt; die Steuerung ist typischerweise derart konfiguriert, dass sie den Antrieb der ortsveränderlichen Halteeinrichtung unter Verwendung des gemessenen Abstands so ansteuert, dass der vorgegebene oder vorgebbare Abstand angenommen wird. Dadurch kann der Bündelabschnitt des Bündelkopfes hinreichend genau in eine gewünschten Lage bzw. Distanz zur ortsveränderlichen Halteeinrichtung gebracht werden. Typischerweise definiert der vorgegebene oder vorgebbare Abstand eine Position des Bündelbereichs am vorauseilenden Ende der Leitungen.

Bei Ausführungsformen weist die Vorrichtung weiter eine ortsfeste Bündeleinrichtung auf. Die ortsfeste Bündeleinrichtung ist in der Bearbeitungsregion der Vorrichtung angeordnet und so konfiguriert, dass sie einen Bündelbereich am nacheilenden Ende der Leitungen bündelt. Typischerweise ist die ortsfeste Bündeleinrichtung ähnlich oder identisch zu der ortsveränderlichen Bündeleinrichtung aufgebaut.

Bei Ausführungsformen ist die Steuerung weiter dazu konfiguriert, die Position des Bündelbereichs am vorauseilenden Ende der Leitungen aus einer Distanz zu einer ersten Kreuzungsposition der Leitungen am vorauseilenden Ende zu bestimmen. Die erste Kreuzungsposition der Leitungen ist die Position, ausgehend von dem jeweils betrachteten Ende, an welcher die Leitungen zum Ausbilden des verdrillten Zustands erstmals aneinander anliegen bzw. sich überkreuzen. Der Steuerung kann eine die erste Kreuzungsposition der Leitungen am vorauseilenden Ende vorgegeben werden, aus welcher sie die Position des Bündelbereichs am vorauseilenden Ende der Leitungen bestimmen kann.

Bei Ausführungsformen sind die ortsveränderliche Bündeleinrichtung, die ortsfeste Bündeleinrichtung oder sowohl die ortsveränderliche Bündeleinrichtung, als auch die ortsfeste Bündeleinrichtung so konfiguriert, dass sie die Leitungen - im jeweiligen Bündelbereich - mit einem Bündelband umwickeln. Das Bündelband kann insbesondere als ein Klebeband ausgestaltet sein.

Bei Ausführungsformen sind die ortsveränderliche Bündeleinrichtung, die ortsfeste Bündeleinrichtung oder sowohl die ortsveränderliche Bündeleinrichtung, als auch die ortsfeste Bündeleinrichtung so konfiguriert, dass sie eine von dem Antrieb unabhängige Positionseinrichtung umfassen. Die jeweilige Positionseinrichtung ist derart konfiguriert, dass sie den Bündelabschnitt der jeweiligen Bündeleinrichtung in Bezug auf das jeweilige zu bündelnde Leitungsende positioniert.

Bei Ausführungsformen ist die ortsveränderliche Halteeinrichtung entlang einer Halteeinrichtungs-Linearführung bewegbar, und die ortsveränderliche Bündeleinrichtung ist entlang einer Bündeleinrichtungs-Linearführung bewegbar. Die Halteeinrichtungs-Linearführung und die Bündeleinrichtungs-Linearführung sind voneinander getrennt und verlaufen zueinander parallel.

Bei Ausführungsformen umfassen sind die ortsveränderliche Bündeleinrichtung, die ortsfeste Bündeleinrichtung oder sowohl die ortsveränderliche Bündeleinrichtung, als auch die ortsfeste Bündeleinrichtung jeweils einen Sensor, insbesondere einen optischen Sensor. Jeder Sensor ist so konfiguriert, dass er eine zugeordnete erste Kreuzungsposition der Leitungen detektiert. Alternativ oder zusätzlich ist jeder Sensor so konfiguriert, dass er das Vorhandensein des Bündelbands detektiert. Alternativ oder zusätzlich ist jeder Sensor so konfiguriert, dass er die Position des Bündelbands relativ zu einer definierten Position der Leitung, typischerweise eines zugeordneten Leitungsendes, detektiert. Dadurch kann die Qualität der gebündelten Mehrzahl von Leitungen weiter verbessert werden.

Typischerweise ist die Steuerung so konfiguriert, dass sie ein Detektionsergebnis aus dem Sensor zum Ansteuern des Antriebs verwendet. Das Detektionsergebnis gibt beispielsweise die erste Kreuzungsposition der Leitungen ausgehend von dem jeweils betrachteten Leitungsende an. Dadurch kann die Positionierung des Bündelabschnitts relativ zum Bündelbereich der gebündelten Leitungen weiter verbessert werden.

Bei Ausführungsformen weist der Sensor einen optischen Zeilensensor auf. Die erste Kreuzungsposition der Leitungen ausgehend von dem jeweils betrachteten Leitungsende wird an einer Position angenommen, die einer Position an dem optischen Zeilensensor entspricht, an welcher die Differenz der Signalintensität benachbarter Bildpunkte des optischen Zeilensensors einen vorbestimmten Schwellenwert überschreitet.

Bei einer alternativen Ausführungsform weist der Sensor einen optischen Sensor mit einer Beleuchtungseinrichtung und einer Digitalkamera auf.

Bei einem hierin offenbarten Verfahren zum Bearbeiten einer Mehrzahl von elektrischen Leitungen wird eine hierin offenbarte Vorrichtung verwendet. Das Verfahren umfasst ein Halten eines vorauseilenden Endes der Leitungen mit der ortsveränderlichen Halteeinrichtung, und Halten eines nacheilenden Endes der Leitungen mit der ortsfesten Halteeinrichtung im Bereich der Bearbeitungsregion und ein Verdrillen der Leitungen am vorauseilenden Ende gegenüber dem nacheilenden Ende und/oder Verdrillen der Leitungen am nacheilenden Ende gegenüber dem vorauseilenden Ende. Nach Abschluss des Verdrillens oder während des Verdrillens sieht das Verfahren ein Ansteuern des Antriebs vor, das derart erfolgt, dass der Abstand zwischen dem Bündelabschnitt der ortsveränderlichen Bündeleinrichtung und der ortsveränderlichen Halteeinrichtung einen vorgegebenen oder vorgebbaren Abstand annimmt. Das Verfahren umfasst weiter ein Bündeln, mit der ortsveränderlichen Bündeleinrichtung, eines Bündelbereichs am vorauseilenden Ende der Leitungen und/oder Bündeln, mit der ortsfesten Bündeleinrichtung, eines Bündelbereichs am nacheilenden Ende der Leitungen.

Mit dem Verfahren kann ein Bündeln einer verdrillten Mehrzahl von Leitungen automatisiert werden. Beispielsweise ist über eine Bedienoberfläche der Abstand vorgebbar. Typischerweise umfasst das Verfahren ferner ein Vorgeben des Abstands relativ zu einer ersten Kreuzungsposition der Leitungen am vorauseilenden Ende. Der Abstand kann demnach als Position relativ zu dem jeweiligen ersten Kreuzungspunkt des betrachteten Leitungsendes vorgebbar sein.

Bei Ausführungsformen umfasst das Verfahren ausserdem ein Detektieren des Vorhandenseins des Bündelbands oder der Position des Bündelbands, ein Bestimmen, aus dem Detektionsergebnis, ob ein Qualitätskriterium erfüllt ist, und ein Ausgeben eines Signals in Abhängigkeit der Bestimmung.

Ein Qualitätskriterium, wie hierin verwendet, kann beispielsweise beinhalten, ob oder ob nicht das Bündelband, das z. B. ein Klebeband ist, an einem oder jedem der Bündelbereiche vorhanden ist, oder ob die Position des Bündelbandes innerhalb eines Toleranzbereichs für den vorgegebenen oder vorgebbaren Abstand liegt.

### Kurze Beschreibung der Zeichnungen

Nachfolgend werden Ausführungsformen der Offenbarung anhand der beigefügten Zeichnungen näher erläutert. Es zeigen:
Fig. 1 ein verdrilltes Leitungspaar zum Verdeutlichen der hierin verwendeten Begriffe;
Fig. 2 einen Bereich des Leitungspaars aus Fig. 1 mit weiteren Aspekten zur Erläuterung;
Fig. 3 eine Draufsicht auf eine Vorrichtung zum Bearbeiten einer Mehrzahl von elektrischen Leitungen ohne eine ortsveränderliche Bündeleinrichtung, zum Erläutern der hierin offenbarten Aspekte;
Fig. 4 eine Draufsicht einer Vorrichtung ähnlich der Fig. 3 gezeigten, gemäss einer Ausführungsform der Offenbarung;
Fig. 5 in perspektivischer Ansicht einen Teilaspekt der Vorrichtung aus Fig. 4;
Fig. 6 in perspektivischer Ansicht einen weiteren Teilaspekt der Vorrichtung aus Fig. 4;
Fig. 7 ein Blockdiagramm einer Steuerung für die in Fig. 4 dargestellte Vorrichtung mit einer Positionsregelung;
Fig. 8 eine Seitenansicht einer Bündeleinrichtung der Vorrichtung aus Fig. 4;
Fig. 9 eine Seitenansicht der Bündeleinrichtung der Vorrichtung aus Fig. 4 in einer weiteren Stellung;
Fig. 10 eine perspektivische Ansicht eines an der Vorrichtung aus Fig. 4 angeordneten optischen Sensors zu Abstandsmessung.

### Beschreibung von Ausführungsformen

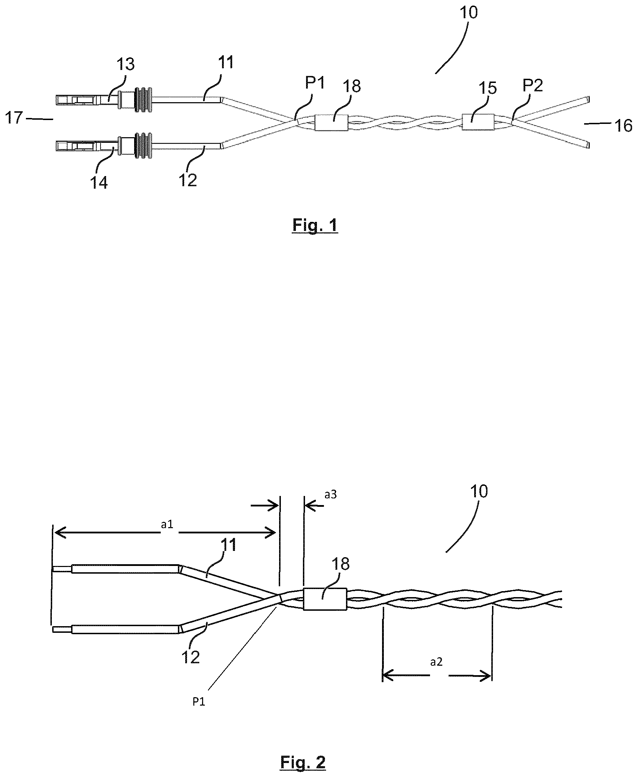

Fig. 1 zeigt ein verdrilltes Leitungspaar 10 aus einer ersten Leitung 11 und einer zweiten Leitung 12. Die Anzahl von zwei Leitungen 11, 12 des Leitungspaars 10 ist anschaulich und nicht einschränkend, und es können auch mehr als zwei Leitungen 11, 12 vorgesehen sein.

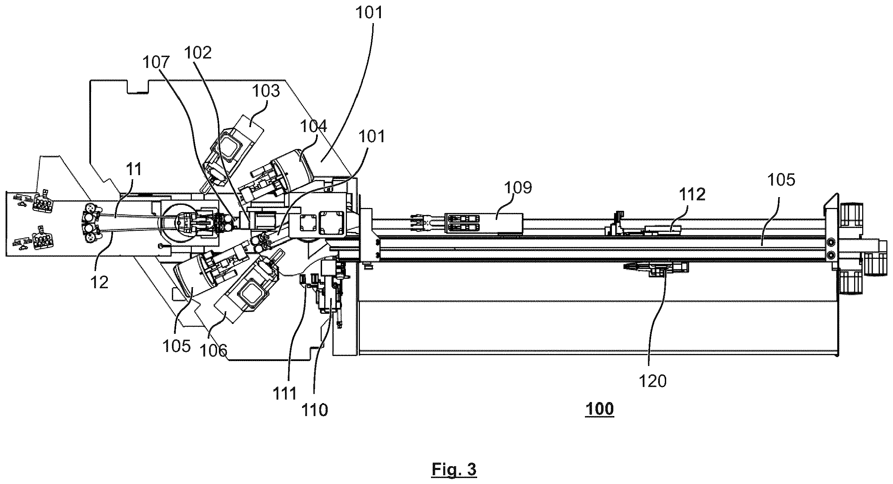

Ein Ende 16 des Leitungspaars 10 wird als vorauseilendes Ende definiert, das durch eine Bearbeitungsregion einer später unter Bezugnahme auf Fig. 3 bis 10 beschriebenen Vorrichtung 100 zum Bearbeiten der Mehrzahl von elektrischen Leitungen 11, 12 geführt wird. Das andere Ende 17 des Leitungspaars wird als nacheilendes Ende definiert.

Am nacheilenden Ende 17 sind ein erster Kontakt 13 und ein zweiter Kontakt 14 an den Leitungen 11 bzw. 12 angebracht. Ein Bereich zwischen den Enden 16, 17 ist verdrillt, d. h. die Leitungen 11, 12 umschlingen sich gegenseitig.

Am vorauseilenden Ende 16 ist in einem Bündelbereich 15 ein Bündelband angebracht, beispielsweise ein Klebeband. Ähnlich ist am nacheilenden Ende 17 in einem Bündelbereich 18 ein Bündelbereich angebracht, beispielsweise ein Klebeband. Die Bündelbänder an den Bündelbereichen 15, 18 verhindern, dass sich die Verdrillung der Leitungen 11, 12 löst. Die Leitungen 11, 12 in Fig. 1 sind mittels der Bündelbänder abgebunden.

Ausgehend vom vorauseilenden Ende 16 überschneiden bzw. überkreuzen sich die Leitungen 11, 12 erstmalig in einem ersten Kreuzungspunkt P2. Ähnlich überschneiden bzw. überkreuzen sich die Leitungen 11, 12 ausgehend vom nacheilenden Ende 17 erstmalig in einem ersten Kreuzungspunkt P1. Die Bündelbereiche 16, 18 sind um einen bestimmten Abstand von dem jeweiligen ersten Kreuzungspunkt P2 bzw. P1 positioniert.

Zur Erläuterung ist ein Teilbereich des Leitungspaars 10 in Fig. 2 nochmals gezeigt. Die unverdrillten Enden der Leitungen 11, 12 am nacheilenden Leitungsende haben eine Länge a1. Auf den ersten Kreuzungspunkt P1 folgt ein Abstand a3 bis zum Beginn des Bindebandes im Bündelbereich 18. Der Abstand zwischen zwei gleichartigen Überkreuzungen bzw. Überschneidungen der Leitungen 11, 12 im verdrillten Bereich ist als die Schlaglänge a2 spezifiziert.

In Fig. 3 ist zu Erläuterungszwecken eine Vorrichtung 100 zum Bearbeiten der Mehrzahl von elektrischen Leitungen 11, 12 ohne eine ortsveränderliche Bündeleinrichtung dargestellt.

In Fig. 3 werden die vorauseilenden Enden der Leitungen 11, 12 in eine Bearbeitungsregion 101 geführt, von wo aus sie weiter an einer Führungsschiene 105 entlang einer Maschinenachse geführt werden können. Bearbeitungsmodule 103, 104, 105, 106 können Manipulationen an den Leitungen 11, 12 in der Bearbeitungsregion 101 durchführen.

Die vorauseilenden Enden der Leitungen 11, 12 werden von einem Schneidkopf 102 abisoliert und mit einer ersten Schwenkeinheit 107 nacheinander Bearbeitungsmodulen 103, 104 auf der einen Seite zugeführt. Hier können beispielsweise jeweils eine Tülle und ein Kontakt am Leiterende montiert werden.

Anschliessend bringt die erste Schwenkeinheit 107 die Leitungen 11, 12 wieder in Richtung der Maschinenachse. Dort werden sie soweit hindurchgeführt, bis sie von einem Auszugsschlitten 109 gegriffen werden können. Die Leitungen 11, 12 werden abhängig von der gewünschten Leitungslänge von dem Auszugsschlitten an entlang der Führungsschiene 105 in der durch die definierten linearen Führungsrichtung ausgezogen.

Die Leiter 11, 12 werden dann von einer zweiten Schwenkeinheit 108 gegriffen und vom Schneidkopf 102 durchtrennt und abisoliert. Die nacheilenden Leiterenden werden von der zweiten Schwenkeinheit 108 den Bearbeitungsmodulen 105, 106 auf der anderen Seite zugeführt und fertig konfektioniert, d. h. beispielsweise wiederum jeweils mit einer Tülle und einem Kontakt versehen.

Ein Transfermodul 111 übernimmt die nacheilenden Leiterenden 11, 12 und übergibt sie nach einer Schwenkbewegung an eine ortsfeste Halteeinrichtung 110. Ein Übernahmemodul 112 übergibt die vorauseilenden Leiterenden 11, 12 einer ortsveränderlichen Halteeinrichtung 120.

Die ortsfeste Halteeinrichtung 110, die ortsveränderliche Halteeinrichtung 120 oder beide Halteeinrichtungen 110, 120 sind jeweils zum Verdrillen der von ihnen gehaltenen Enden der Leitungen 11, 12 ausgebildet. Beispielsweise weist die ortsveränderliche Halteeinrichtung 120 einen Verdrillkopf auf, der um die Maschinenachse gedreht werden kann und damit den Verdrillvorgang durchführt. Die ortsveränderliche Halteeinrichtung 120 wird während des Verdrillvorgangs in Richtung der ortsfesten Halteeinrichtung 110 bewegt, um die Verkürzung der Leitungen 11, 12 zu kompensieren.

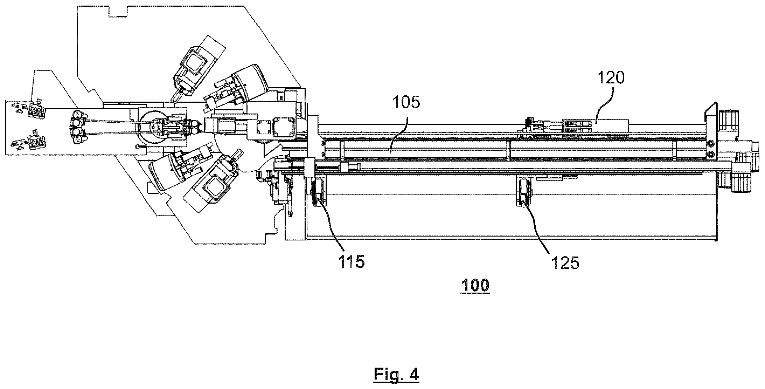

In Fig. 4 ist die Vorrichtung 100 aus Fig. 3 gezeigt, wobei zusätzlich eine ortsveränderliche Bündeleinrichtung 125 vorgesehen ist. Optional kann, wie in Fig. 4 gezeigt, in der Bearbeitungsregion 101 auch eine ortsfeste Bündeleinrichtung 115 vorgesehen sein. Die Bündeleinrichtungen 115, 125 sind beispielsweise als Bündelköpfe ausgebildet, wie sie aus der DE 20 2015 001 990 U1 bekannt sind, und sie weisen jeweils einen Bündelabschnitt 116 bzw. 126 auf, in welchem die Bündelbereiche 115, 125 mit einem Bündelband, beispielsweise einem Klebeband, umwickelt werden können. Die ortsfeste Bündeleinrichtung 115 ist beispielsweise spiegelbildlich zur ortsveränderlichen Bündeleinrichtung 125 ausgebildet, damit sie in unmittelbarer Nachbarschaft zu den jeweils benachbarten Baugruppen positioniert werden können.

Die Bündelköpfe 115, 125 sind auf einer zusätzlichen Linearführung separat von den Halteeinrichtungen 110, 120 bewegbar, und zwar parallel zur Bewegungsrichtung der ortsveränderlichen Halteeinrichtung 120.

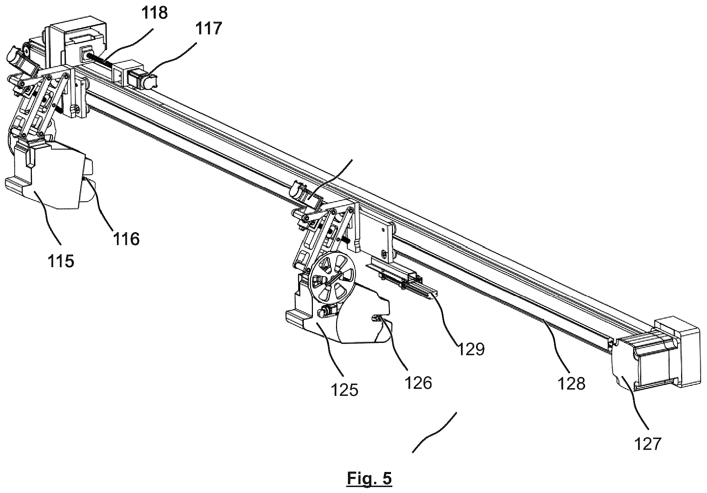

Fig. 5 stellt die Bündeleinrichtungen, oder Bündelköpfe, 115, 125 an der Führungseinrichtung 105 in einer perspektivischen Ansicht separat dar. In Fig. 5 ist die ortsveränderliche Bündeleinrichtung 125 über einen Zahnriemen 128 mit einem Servomotor 127 verbunden. Servomotor 127 und Zahnriemen 128 bilden ein nicht-einschränkendes Beispiel für einen Antrieb und können die ortsveränderliche Bündeleinrichtung über einen weiten Bereich entlang der Führungseinrichtung 105 bewegen. Die ortsfeste Bündeleinrichtung 115 kann in einem kleinen Bereich über einen Antrieb aus einem Servomotor 117 und einer Spindel 118 bewegt.

Eine Abstandsmesseinrichtung 129 ist in Fig. 5 fest mit der ortsveränderlichen Bündeleinrichtung 125 verbunden und so konfiguriert, dass sie ein Abstandssignal, das direkt oder indirekt einen Abstand zwischen dem Bündelabschnitt 126 der ortsveränderlichen Bündeleinrichtung 125 und der ortsveränderlichen Halteeinrichtung 120 angibt, an eine Steuerung ausgeben kann.

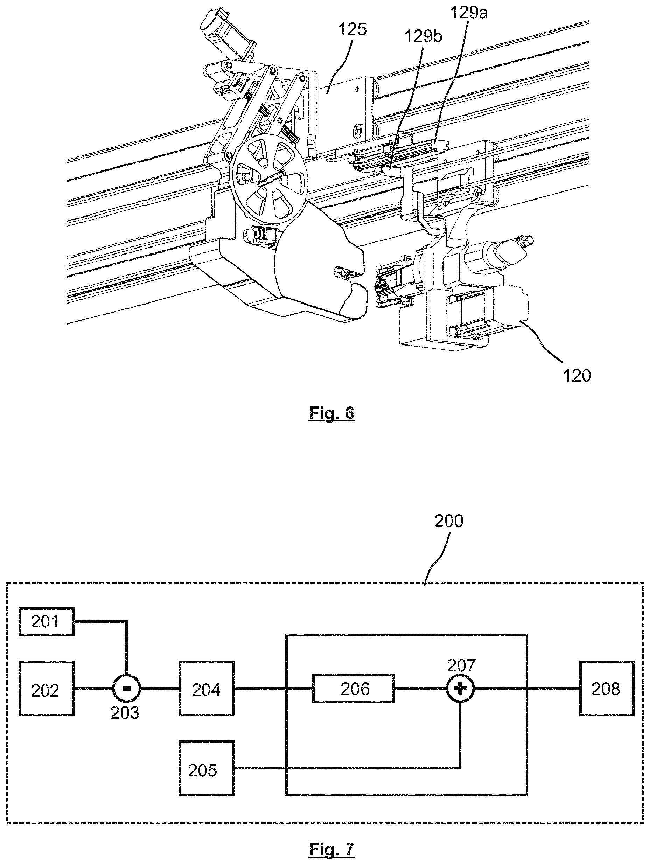

Fig. 6 zeigt in einer perspektivischen Detailansicht die Abstandsmesseinrichtung 129, die beispielsweise aus einem Wegaufnehmer 129a und einem Positionsgeber 129b gebildet ist. Der Positionsgeber 129b ist am Schlitten der ortsveränderlichen Halteeinrichtung 120 verbunden.

Fig. 7 zeigt ein Blockdiagramm einer Steuerung 200, die zum Ansteuern des Antriebs 127, 128 konfiguriert ist. Die Steuerung 200 führt eine mit Hilfe der Abstandsmesseinrichtung 129 realisierte Positionsregelung der ortsveränderlichen Bündeleinrichtung 125 relativ zur ortsveränderlichen Halteeinrichtung 120 durch.

In Fig. 7 werden ein gewünschter Abstand 201 und ein Signal 202 aus der Abstandsmesseinrichtung 129 voneinander subtrahiert und die Differenz einem PI-Regler 204 zugeführt, der die Abweichung als vorläufiges Stellsignal 206 ausgibt. Zu dem vorläufigen Stellsignal 206 wird die momentane Bewegung 205 der zur Verkürzungskompensation positionsgeregelten ortsveränderlichen Bündeleinrichtung 125 addiert, und das resultierende Signal wird als Stellsignal 208 für die Positionierung der ortsveränderlichen Bündeleinrichtung 125 ausgegeben.

Auf ähnliche Weise kann die Steuerung 200 dann, wenn eine ortsfeste Bündeleinrichtung 115 verwendet wird, ein Regelsignal zur Feinpositionierung der ortsfesten Bündeleinrichtung 115 durch deren Antrieb 117, 118 erzeugen, um den Bündelabschnitt 116 am nacheilenden Ende der Leitungen 11, 12 zu positionieren.

Eine Steuerung 200, die ein hierin offenbartes Verfahren ausführt, ist beispielsweise in einer Maschinensteuerung einer hierin offenbarten Vorrichtung enthalten. Die Maschinensteuerung kann aus den Prozessparametern die zu erwartende Geometrie der verdrillten Leitungen berechnen, insbesondere die Länge a1 der unverdrillten Leitungsenden (siehe Fig. 2), die Lage der Kreuzungspunkte P1, P2 etc. Daraus können die relativen Positionen bestimmt werden, zu denen die Bündeleinrichtungen 115, 125 zu bringen sind. Beispiele für die Prozessparameter sind die gewünschte Kabellänge, die Schlaglänge, der Kabelquerschnitt und der Kabelabstand in den verwendeten Greifeinrichtungen.

Während die Leiter 11, 12 konfektionier, ausgezogen und verdrillt werden, sind die Bündeleinrichtungen 115, 125 ausserhalb der Kabelachse gebracht. Vor dem Abschluss des Verdrillens werden die Bündeleinrichtungen 115, 125 in Achsrichtung der Leitungen 11, 12 positioniert, so dass das Bündelband an der gewünschten Position angebracht werden kann. Die ortsveränderliche Bündeleinrichtung 125 wird dabei geregelt in Abhängigkeit der Bewegung der ortsveränderlichen Halteeinrichtung 120 nachgeführt.

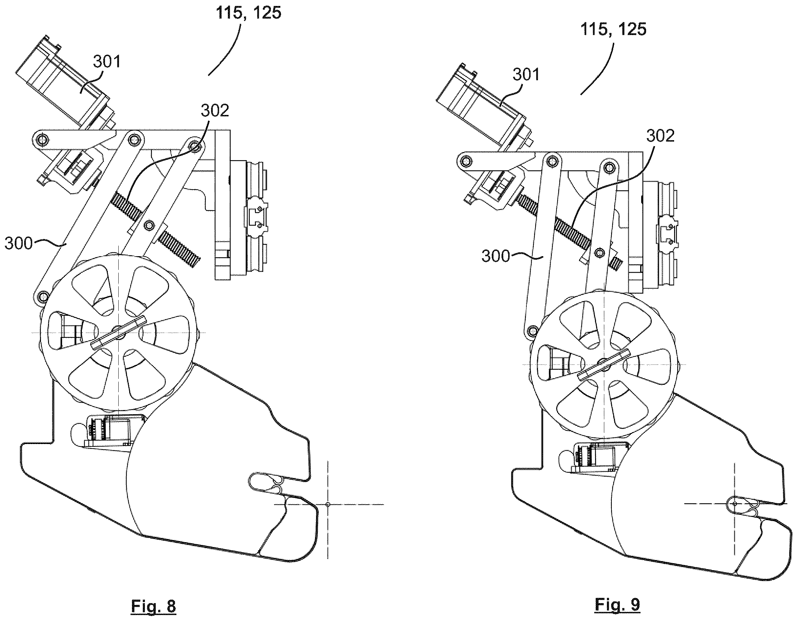

Nach Abschluss des Verdrillvorgangs können die jeweiligen Bündeleinrichtungen 115, 125 über den jeweiligen Bündelbereich 15, 18 gebracht werden. Dazu sind die jeweiligen Bündeleinrichtungen 115, 125, wie in Fig. 8 und Fig. 9 dargestellt, an einem Parallelogramm-Gestänge 300 aufgehängt, das mittels eines Antriebs aus einem Servomotor 301 und einer Spindel 302 zwischen der in Fig. 8 gezeigten Lage und der in Fig. 9 gezeigten Lage verstellbar ist. Alternativ können auch andere Aktuatoren zum Verstellen verwendet werden beispielsweise pneumatische Aktuatoren oder andere mechanische Lösungen. Diese Anordnung erlaubt es, dass die Bündeleinrichtungen 115, 125 positioniert werden können, ohne dass der eigentliche Verdrillprozess beeinträchtigt wird. Die Bündeleinrichtungen bringen an den Bündelbereichen 15, 18 die Bündelbänder an.

Es können optische Sensoren vorgesehen sein, um fehlerhaft gebündelte Leitungen 11, 12 zu erkennen. Beispielsweise wird eine Auswertung der optischen Sensoren dazu verwendet, ein fehlerhaft gebündeltes Leiterpaar 10 automatisch auzusortieren. Die optischen Sensoren können auch dazu dienen, andere Parameter der Leitungen 11, 12 zu detektieren, beispielsweise eine korrekte Abisolierung oder eine korrekte Bestückung mit Tüllen und/oder Kontakten.

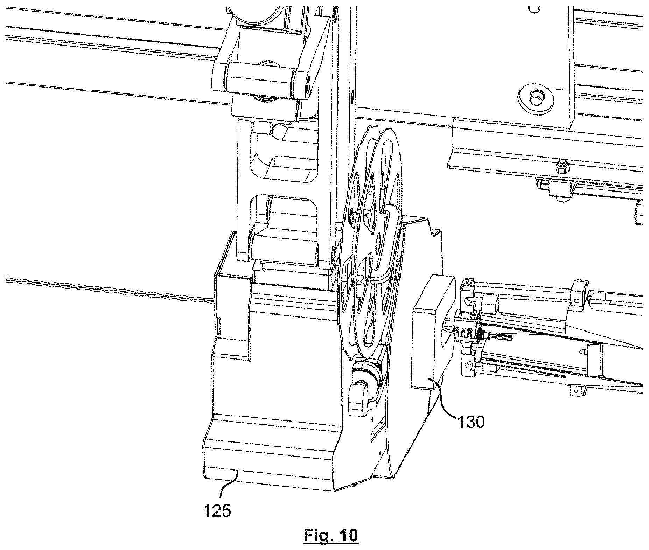

In Fig. 10 ist in detaillierter perspektivischer Ansicht die ortsveränderliche Bündeleinrichtung 125 dargestellt; die folgenden Ausführungen gelten optional aber auch für die ortsfeste Bündeleinrichtung 115. Wie in Fig. 10 erkennbar, ist ein optischer Sensor 130 vorgesehen, der die korrekte Ausführung des Bündelvorgangs prüfen kann. Insbesondere kann der Sensor 130 das Vorhandensein oder Nichtvorhandensein, optional auch die Position, des Bündelbands relativ zu dem jeweiligen ersten Kreuzungspunkt P2 bzw. P1 erkennen. Es wird möglich, die Lage des angebrachten Bündelbandes als Qualitätswert zu überwachen. Ein Positionswert des jeweiligen Kreuzungspunktes P1, P2, der der Steuerung 200 zugeführt wird, ermöglicht es auch, die Position des jeweiligen Bündelbereichs 15, 18 adaptiv nachzuregeln.

Der Sensor 130 ist typischerweise direkt an der jeweiligen Bündeleinrichtung 115, 125 montiert und wird gemeinsam damit bewegt. Beispielsweise kann der Sensor 130 über den Bündelbereich 15, 18 und den ersten Kreuzungspunkt P1, P2 bewegt, typischerweise entlang der Leitungsachse. Hier kann ein zeilenweises Intensitätsbild ("Schattenbild") dieses Bereichs zur Auswertung gewonnen werden. Auch möglich als Sensor 130 ist eine Digitalkamera mit Beleuchtung, die ebenfalls entlang der Leitungsachse bewegt werden kann und deren Bilder beispielsweise mittels einer Bildauswertungssoftware analysiert werden.

Wenn die optischen Sensoren 130 für die Qualitätsüberwachung eingesetzt werden, führen die Bündeleinrichtungen 115,125 die zur Messung notwendigen Bewegungen entlang der Achsen der Leitungen 11, 12 aus. Die Messdaten werden an die Maschinensteuerung übertragen und ausgewertet.

Zum Abschliessen des Bündelvorgangs schwenken die Bündeleinrichtungen 115, 125 wieder in die Lage ausserhalb der Achse der Leitungen 11, 12, und das fertige Kabel wird ausgegeben. Wenn eine Qualitätsüberwachung zum Einsatz kommt, kann das fertige Kabel einer entsprechenden Ablage zugeführt werden, beispielsweise einer Ablagewanne, die der detektierten Qualität entspricht.

## Patentansprüche

1. Vorrichtung (100) zum Bearbeiten einer Mehrzahl von elektrischen Leitungen (11, 12), die Folgendes umfasst:
eine Zuführungseinrichtung, konfiguriert zum Führen eines vorauseilenden Endes der Mehrzahl von Leitungen durch den Bereich einer Bearbeitungsregion;
eine im Bereich der Bearbeitungsregion angeordnete ortsfeste Halteeinrichtung (110), konfiguriert zum Halten eines nacheilenden Endes der Leitungen;
eine entlang einer linearen Führungsrichtung ortsveränderliche Halteeinrichtung (120), konfiguriert zum Halten des vorauseilenden Endes der Leitungen,
wobei die ortsfeste Halteeinrichtung (110) und/oder die ortsveränderliche Halteeinrichtung (120) dazu konfiguriert ist, das jeweilige gehaltene Ende der Leitungen zu verdrillen;
eine von der ortsveränderlichen Halteeinrichtung (120) separate und entlang der linearen Führungsrichtung mittels eines ansteuerbaren Antriebs (127, 128) ortsveränderliche Bündeleinrichtung (125), die einen Bündelabschnitt aufweist, wobei der Bündelabschnitt zum Bündeln eines Bündelbereichs am vorauseilenden Ende der Leitungen konfiguriert ist;
eine mit dem Antrieb (127, 128) der ortsveränderlichen Bündeleinrichtung (125) verbundene Steuerung (200), konfiguriert zum Ansteuern des Antriebs derart, dass ein Abstand zwischen dem Bündelabschnitt der ortsveränderlichen Bündeleinrichtung (125) und der ortsveränderlichen Halteeinrichtung (120) einen vorgegebenen oder vorgebbaren Abstand annimmt.

2. Vorrichtung (100) nach Anspruch 1, die weiter Folgendes umfasst:
eine Abstandsmesseinrichtung (129), konfiguriert zum Messen des Abstands zwischen dem Bündelabschnitt der ortsveränderlichen Bündeleinrichtung und der ortsveränderlichen Halteeinrichtung,
wobei die Steuerung (200) zusätzlich mit der Abstandsmesseinrichtung (129) verbunden ist.

3. Vorrichtung (100) nach Anspruch 1 oder 2, die weiter Folgendes umfasst:
eine ortsfeste Bündeleinrichtung (115), angeordnet in der Bearbeitungsregion und konfiguriert zum Bündeln eines Bündelbereichs am nacheilenden Ende der Leitungen.

4. Vorrichtung (100) nach einem der vorhergehenden Ansprüche, wobei der vorgegebene oder vorgebbare Abstand eine Position des Bündelbereichs am vorauseilenden Ende der Leitungen definiert.

5. Vorrichtung (100) nach Anspruch 4, wobei die Steuerung (200) weiter dazu konfiguriert ist, die Position des Bündelbereichs am vorauseilenden Ende der Leitungen aus einer Distanz zur ersten Kreuzungsposition der Leitungen am vorauseilenden Ende zu bestimmen.

6. Vorrichtung (100) nach einem der vorhergehenden Ansprüche, wobei die Abstandsmesseinrichtung ein magnetostriktives Positionsmesssystem, ein magnetisches Positionsmesssystem oder ein optisches Positionsmesssystem umfasst.

7. Vorrichtung nach einem der vorhergehenden Ansprüche, wobei die Abstandsmesseinrichtung (129) einen Positionsgeber (129b) und eine Wegaufnehmeinrichtung (129a) umfasst, wobei der Positionsgeber (129b) an einer Linearführung, insbesondere an einem Führungsschlitten, der ortsveränderlichen Halteeinrichtung angeordnet ist.

8. Vorrichtung (100) nach einem der vorhergehenden Ansprüche, wobei eine oder beide von ortsveränderlicher Bündeleinrichtung (125) und ortsfester Bündeleinrichtung (115) zum Umwickeln der Leitungen mit einem Bündelband, insbesondere zum Umwickeln der Leitungen mit einem Klebeband, konfiguriert sind.

9. Vorrichtung (100) nach einem der vorhergehenden Ansprüche, wobei eine oder beide von ortsveränderlicher Bündeleinrichtung (125) und ortsfester Bündeleinrichtung (115) jeweils eine von dem Antrieb (127, 128) unabhängige Positionierungseinrichtung umfassen, wobei die Positionierungseinrichtung dazu konfiguriert ist, den Bündelabschnitt der jeweiligen Bündeleinrichtung in Bezug auf das jeweilige zu bündelnde Leitungsende zu positionieren.

10. Vorrichtung (100) nach einem der vorhergehenden Ansprüche, wobei die ortsveränderliche Halteeinrichtung (120) entlang einer Halteeinrichtungs-Linearführung bewegbar ist, wobei die ortsveränderliche Bündeleinrichtung (125) entlang einer Bündeleinrichtungs-Linearführung bewegbar ist, wobei die Halteeinrichtungs-Linearführung und die Bündeleinrichtungs-Linearführung voneinander getrennt sind und zueinander parallel verlaufen.

11. Vorrichtung nach einem der vorhergehenden Ansprüche, wobei eine oder beide von ortsveränderlicher Bündeleinrichtung (125) und ortsfester Bündeleinrichtung (115) jeweils einen Sensor, insbesondere einen optischen Sensor (130), aufweist, wobei der jeweilige Sensor zur Detektion der ersten Kreuzungsposition der Leitungen und/oder zur Detektion des Vorhandenseins des Bündelbands und/oder zur Detektion der Position des Bündelbands konfiguriert ist.

12. Vorrichtung (100) nach Anspruch 10, wobei die Steuerung (200) dazu konfiguriert ist, ferner ein Detektionsergebnis aus dem Sensor, das die erste Kreuzungsposition der Leitungen angibt, zum Ansteuern des Antriebs zu verwenden.

13. Vorrichtung (100) nach Anspruch 11, wobei der Sensor einen optischen Zeilensensor aufweist, und die erste Kreuzungsposition der Leitungen an einer Position angenommen wird, die einer Position an dem optischen Zeilensensor entspricht, an welcher eine Differenz der Signalintensität benachbarter Bildpunkte des optischen Zeilensensors einen vorbestimmten Schwellenwert überschreitet.

14. Vorrichtung (100) nach Anspruch 11, wobei der Sensor einen optischen Sensor mit einer Beleuchtungseinrichtung und einer Digitalkamera aufweist.

15. Verfahren zum Bearbeiten einer Mehrzahl von elektrischen Leitungen (11, 12) unter Verwendung einer Vorrichtung (100) nach einem der Ansprüche 1 bis 14, wobei das Verfahren Folgendes umfasst:
Halten eines vorauseilenden Endes der Leitungen mit der ortsveränderlichen Halteeinrichtung (120), und Halten eines nacheilenden Endes der Leitungen mit der ortsfesten Halteeinrichtung (110) im Bereich der Bearbeitungsregion;
Verdrillen der Leitungen am vorauseilenden Ende gegenüber dem nacheilenden Ende und/oder Verdrillen der Leitungen am nacheilenden Ende gegenüber dem vorauseilenden Ende;
nach Abschluss des Verdrillens oder während des Verdrillens: Ansteuern des Antriebs (127, 128) derart, dass der Abstand zwischen dem Bündelabschnitt der ortsveränderlichen Bündeleinrichtung (125) und der ortsveränderlichen Halteeinrichtung (120) einen vorgegebenen oder vorgebbaren Abstand annimmt;
Bündeln, mit der ortsveränderlichen Bündeleinrichtung (125), eines Bündelbereichs am vorauseilenden Ende der Leitungen und/oder Bündeln, mit der ortsfesten Bündeleinrichtung (115), eines Bündelbereichs am nacheilenden Ende der Leitungen.

16. Verfahren nach Anspruch 15 unter Verwendung einer Vorrichtung (200) nach einem der Ansprüche 11 bis 14, das ferner Folgendes umfasst:
Detektieren des Vorhandenseins des Bündelbands oder der Position des Bündelbands;
Bestimmen, aus dem Detektionsergebnis, ob ein Qualitätskriterium erfüllt ist;
Ausgeben eines Signals in Abhängigkeit der Bestimmung.

17. Verfahren nach Anspruch 15 oder 16, das ferner Folgendes umfasst:
Vorgeben des Abstands relativ zu einer ersten Kreuzungsposition der Leitungen am vorauseilenden Ende.

## Claims

1. An apparatus (100) for processing a plurality of electrical wires (11, 12), comprising:
a feed device, configured to guide a leading end of a plurality of wires through a zone of a processing region;
a stationary holding device (110) arranged in the zone of the processing region, configured to hold a lagging end of the wires;
a non-stationary holding device (120) that is non-stationary along a linear guiding direction, configured to hold the leading end of the wires,
wherein the stationary holding device (110) and/or the non-stationary holding device (120) is configured to twist the held end of the wires respectively;
a non-stationary bundling device (125) that is non-stationary along the linear guiding direction by means of a controllable drive (127, 128) and is separate from the non-stationary holding device (120), which comprises a bundling segment, wherein the bundling segment is configured to bundle a bundling region on the leading end of the wires.
a controller (200) connected to the drive (127, 128) of the non-stationary bundling device (125), configured to control the drive in such a way that a distance between the bundling segment of the non-stationary bundling device (125) and the non-stationary holding device (120) assumes a specified or a specifiable distance.

2. The apparatus (100) according to claim 1, further comprising:
a distance measuring device (129) configured to measure the distance between the bundling segment of the non-stationary bundling device and the non-stationary holding device,
wherein the controller (200) is additionally connected to the distance measuring device (129).

3. The apparatus (100) according to claim 1 or 2, which furthermore comprises the following:
a stationary bundling device (115), arranged in the processing region and configured to bundle a bundling region on the lagging end of the wires.

4. The apparatus (100) according to any one of the preceding claims, wherein the specified or specifiable distance defines a position of the bundling region on the leading end of the wires.

5. The apparatus (100) according to claim 4, wherein the controller (200) is furthermore configured to determine the position of the bundling region on the leading end of the wires from a distance to the first intersecting position of the wires on the leading end.

6. The apparatus (100) according to any one of the preceding claims, wherein the distance measuring device comprises a magnetostrictive position measuring system, and magnetic position measuring system or an optical position measuring system.

7. The apparatus according to any one of the preceding claims, wherein the distance measuring device (129) comprises a position indicator (129b) and path-sensor device (129a), wherein the position indicator (129b) is arranged on a linear guide, in particular, on a guide carriage, of the non-stationary holding device.

8. The apparatus (100) according to any one of the preceding claims, wherein one or both of the non-stationary bundling device (125) and the stationary bundling device (115) are configured to wrap the wires with a bundle binder, in particular, to wrap the wires with an adhesive tape.

9. The apparatus (100) according to any one of the preceding claims, wherein one or both the non-stationary bundling device (125) and the stationary bundling device (115) each comprise a positioning device independent from the drive (127, 128), wherein the positioning device is configured to position the bundling segment of the respective bundling device in relation to the respective wire end to be bundled.

10. The apparatus (100) according to any one of the preceding claims, wherein the non-stationary holding device (120) can be moved along a holding device linear guide, wherein the non-stationary bundling device (125) can be moved along a bundling device linear guide, wherein the holding device linear guide and the bundling device linear guide are separate from one another and run parallel with one another.

11. The apparatus according to any one of the preceding claims, wherein one or both the non-stationary bundling device (125) and the stationary bundling device (115) each comprise a sensor, in particular, an optical sensor (130), wherein the respective sensor is configured to detect the first intersecting position of the wires and/or to detect the presence of the bundle binder and/or to detect the position of the bundle binder.

12. The apparatus (100) according to claim 10, wherein the controller (200) is configured to further use a detection result from the sensor, which indicates the first intersecting position of the wires, to control the drive.

13. The apparatus (100) according to claim 11, wherein the sensor comprises an optical line sensor and the first intersecting position of the wires is assumed at a position, which corresponds to the position on the optical line sensor, at which a difference of the signal intensity of the adjacent image points of the optical line sensor exceeds a predetermined threshold.

14. The apparatus (100) according to claim 11, wherein the senor comprises an optical sensor with an illumination means and an digital camera.

15. A method for processing a plurality of electrical wires (11, 12) using an apparatus (100) according to any one of the claims 1 to 14, the method comprising:
holding a leading end of the wires with the non-stationary holding device (120), and holding a lagging end of the wires with the stationary holding device (110) in the zone of the processing region;
twisting the wires on the leading end against the lagging end and/or twisting the wires on the lagging end against the leading end;
after completion of the twisting or during twisting: controlling the drive (127, 128) in such a way that the distance between the bundling segment of the non-stationary bundling device (125) and the non-stationary holding device (120) assumes a specified or a specifiable distance;
bundling, with the non-stationary bundling device (125), a bundling region on the leading end of the wires and/or bundling, with the stationary bundling device (115), a bundling region on the lagging end of the wires.

16. The method according to claim 15 using the apparatus (200) according to any one of the claims 11 to 14, further comprising:
detecting the presence of the bundle binder or the position of the bundle binder;
determining if a quality criterion is fulfilled from the detection results;
outputting a signal depending on the determination.

17. The method according to claim 15 or 16, further comprising:
specifying the distance relative to a first intersecting position of the wires on the leading end.

## Revendications

1. Dispositif (100) pour l'élaboration d'une pluralité de câbles électriques (11, 12), qui comprend les éléments suivants :
un système d'alimentation, configuré pour guider une extrémité avant de la pluralité de câbles à travers la zone d'un secteur de traitement,
un système de maintien (110) fixe disposé dans la zone du secteur de traitement, configuré pour maintenir une extrémité arrière des câbles,
un système de maintien (120) mobile le long d'une direction de guidage linéaire, configuré pour maintenir l'extrémité avant des câbles,
par lequel le système de maintien fixe (110) et/ou le système de maintien (120) mobile est configuré pour torsader l'extrémité maintenue respective des câbles,
un système de mise en faisceau (125) séparé du système de maintien mobile (120) et mobile le long de la direction de guidage linéaire au moyen d'un système d'entraînement (127, 128) pouvant être commandé, qui comporte une section de mise en faisceau, par lequel la section de mise en faisceau est configurée pour mettre en faisceau une zone de mise en faisceau à l'extrémité avant des câbles,
une commande (200) reliée au système d'entraînement (127, 128) du système de mise en faisceau mobile (125), configurée pour commander le système d'entraînement de telle manière qu'une distance entre la section de mise en faisceau du système de mise en faisceau mobile (125) et le système de maintien mobile (120) adopte une distance prédéfinie ou prédéfinissable.

2. Dispositif (100) selon la revendication 1, qui comprend en plus les éléments suivants :
un système de mesure de distance (129), configuré pour mesurer la distance entre la section de mise en faisceau du système de mise en faisceau mobile et le système de maintien mobile,
par lequel la commande (200) est relié en plus au système de mesure de distance (129).

3. Dispositif (100) selon la revendication 1 ou 2, qui comprend en plus les éléments suivants :
un système de mise en faisceau fixe (115), disposé dans la zone de traitement et configuré pour mettre en faisceau une zone de mise en faisceau à l'extrémité arrière des câbles.

4. Dispositif (100) selon l'une quelconque des revendications précédentes, par lequel la distance prédéfinie ou prédéfinissable définit une position de la zone de mise en faisceau à l'extrémité avant des câbles.

5. Dispositif (100) selon la revendication 4, par lequel la commande (200) est en plus configurée pour déterminer la position de la zone de mise en faisceau à l'extrémité avant des câbles à partir d'une distance par rapport à la première position de croisement des câbles à l'extrémité avant.

6. Dispositif (100) selon l'une quelconque des revendications précédentes, par lequel le système de mesure de distance comprend un système de mesure de position magnétostrictif, un système de mesure de position magnétique ou un système de mesure de position optique.

7. Dispositif selon l'une quelconque des revendications précédentes, par lequel le système de mesure de distance (129) comprend un transmetteur de position (129b) et un système de gestion de course (129a), par lequel le transmetteur de position (129b) est disposé sur un guidage linéaire, en particulier sur un chariot de guidage, du système de maintien mobile.

8. Dispositif (100) selon l'une quelconque des revendications précédentes, par lequel un ou les deux systèmes de mise en faisceau mobiles (125) et systèmes de mise en faisceau fixes (115) sont configurés pour enrouler les câbles avec une bande de faisceau, en particulier pour enrouler les câbles avec une bande adhésive.

9. Dispositif (100) selon l'une quelconque des revendications précédentes, par lequel un ou les deux systèmes de mise en faisceau mobiles (125) et systèmes de mise en faisceau fixes (115) comprennent respectivement un système de positionnement indépendant du système d'entraînement (127, 128), par lequel le système de positionnement est configuré pour positionner la section de mise en faisceau du système de mise en faisceau respectif par rapport à l'extrémité de câble respectivement à mettre en faisceau.

10. Dispositif (100) selon l'une quelconque des revendications précédentes, par lequel le système de maintien mobile (120) peut être déplacé le long d'un guidage linéaire du système de maintien, par lequel le système de mise en faisceau mobile (125) peut être déplacé le long d'un guidage linéaire du système de mise en faisceau, par lequel le guidage linéaire du système de maintien et le guidage linéaire du système de mise en faisceau sont séparés les uns des autres et passent parallèlement les uns aux autres.

11. Dispositif selon l'une quelconque des revendications précédentes, par lequel un ou les deux systèmes de mise en faisceau mobiles (125) et systèmes de mise en faisceau fixes (115) comportent respectivement, en particulier, un capteur optique (130), par lequel le capteur respectif est configuré pour la détection de la première position de croisement des câbles et/ou pour la détection de la présence de la bande de faisceau et/ou pour la détection de la position de la bande de faisceau.

12. Dispositif (100) selon la revendication 10, par lequel la commande (200) est configurée pour utiliser en plus un résultat de détection du capteur, qui indique la première position de croisement des câbles, pour commander le système d'entraînement.

13. Dispositif (100) selon la revendication 11, par lequel le capteur comporte un capteur de lignes optique et la première position de croisement des câbles à une position est adoptée, qui correspond à une position sur le capteur de lignes optique à laquelle une différence de l'intensité de signalisation des points d'image voisins du capteur de lignes optique dépasse une valeur de seuil prédéterminée.

14. Dispositif (100) selon la revendication 11, par lequel le capteur comporte un capteur optique avec un dispositif d'éclairage et une caméra numérique.

15. Procédé de traitement d'une pluralité de câbles électriques (11, 12) en utilisant un dispositif (100) selon l'une quelconque des revendications 1 à 14, par lequel le procédé comprend les étapes suivantes :
maintien d'une extrémité avant des câbles avec le système de maintien mobile (120) et maintien d'une extrémité arrière des câbles avec le système de maintien fixe (110) dans la zone du secteur de traitement,
torsadage des câbles à l'extrémité avant par rapport à l'extrémité arrière et/ou torsadage des câbles à l'extrémité arrière par rapport à l'extrémité avant,
après expiration du torsadage ou pendant le torsadage : commande du système d'entraînement (127, 128) de telle manière que la distance entre la section de mise en faisceau du système de mise en faisceau mobile (125) et du système de maintien mobile (120) adopte une distance prédéfinie ou prédéfinissable,
mise en faisceau avec le système de mise en faisceau mobile (125) d'une zone de mise en faisceau à l'extrémité avant des câbles et/ou mise en faisceau avec le système de mise en faisceau fixe (115) d'une zone de mise en faisceau à l'extrémité arrière.

16. Procédé selon la revendication 15 en utilisant un dispositif (200) selon l'une quelconque des revendications 11 à 14, qui comprend en plus les étapes suivantes :
détection de la présence de la bande de faisceau ou de la position de la bande de faisceau,
détermination, à partir du résultat de la détection, si un critère de qualité est satisfait,
émission d'un signal en fonction de la détermination.

17. Procédé selon la revendication 15 ou 16, qui comprend en plus l'étape suivante :
détermination préalable de la distance concernant une première position de croisement des câbles à l'extrémité avant.
